# EUROPEAN PATENT SPECIFICATION

(11) **EP 2 983 893 B1**
(45) Date of publication and mention of the grant of the patent: **22.05.2019**
(21) Application number: 14716555.9
(22) Date of filing: 08.04.2014
(51) Int. Cl.: B65B 43/08, B29C 65/10, B29C 65/00, B65B 41/16, B65B 55/04, B65B 51/20, B65B 51/26, B31B 100/00, B31B 110/35, B29L 31/00

(54) **METHOD FOR PROCESSING OF PACKAGING LAMINATE AND DEVICE PERFORMING THE METHOD**
VERFAHREN ZUR VERARBEITUNG EINES VERPACKUNGSLAMINATS UND VORRICHTUNG ZUR DURCHFÜHRUNG DES VERFAHRENS
PROCÉDÉ DE TRAITEMENT DE STRATIFIÉ D'EMBALLAGE ET DISPOSITIF DE MISE EN OEUVRE DU PROCÉDÉ

(30) Priority: 10.04.2013 SE 1350447
(43) Date of publication of application: 17.02.2016
(73) Proprietor: Tetra Laval Holdings & Finance SA, 1009 Pully (CH)
(72) Inventor: BORGSTRÖM, Rolf, S-234 37 Lomma (SE); REGNER, Lars, 23942 Falsterbo (SE)
(74) Representative: Tetra Pak - Patent Attorneys SE
(86) International application number: PCT/EP2014/057017
(87) International publication number: WO 2014/166932

(56) References cited:
- JP-A- 2006 224 977
- US-A- 3 120 089
- US-A- 3 580 788
- US-A- 3 581 972
- US-A- 3 775 222
- US-A- 3 800 677
- US-A- 3 884 131
- US-A- 3 890 765

## Description

### Technical Field

The present invention relates various aspects and effects of a heating arrangement for packaging material, in particular packaging material comprising a core laminated with a thermoplastic material.

### Technical Background

Packaging containers comprising a core laminated by thermoplastic material are well known, in particular in the field of food packaging. The core is more often than not made from a fibrous material such as cellulose fibres, e.g. in the form of paper.

The raw material (paper) for a packaging laminate is manufactured in a paper mill and is forwarded to a further processing facility in a large reel of web material. This second processing facility may be referred to as a *converting* facility. In a converting facility the paper core is combined with further layers (aluminium foil, resin layers, adhesives, print etc.), is cut into more convenient sizes, and is optionally provided with crease lines (lines along which a later package will be folded).

The packaging laminate is thereafter prepared to fit into one of two filling-machine concepts within the packaging business; roll-fed systems or blanks fed systems. Roll-fed systems refer to filling machines where the packaging laminate is provided to the filling machine in the form of a roll of packaging material. The roll may comprise raw material for thousands of packaging container and is then, within the constraints of the filling machine, cut into shape, folded, sealed and filled with product within the constraints of the filling machine. The order of operations may vary between different machine concepts. For blanks fed systems the packaging laminate may be cut into individual blanks already in the converting facility. The blanks may also be formed into flattened tubes of packaging material before leaving the converting facility. These blanks are then fed into the filling machine, where the remaining folding and sealing steps are performed, and the package is filled.

The above division is slightly simplified, and well known to the skilled person, and is given since the present invention will relate to features in a converting factory as well as features in a filling facility to the benefit of a reader of the present application rather than to disclose every technical aspect considered in prior art.

Common features between the concepts are that the web or a blank formed from the web is sealed along a longitudinal edge for forming of a sleeve before a first end of the packaging container is sealed, the package is filled, and the second end of the package is sealed. The first sealing process is often referred to as longitudinal sealing, and the second (the sealing of the ends of the packaging container) is referred to as transversal sealing.

The sealing involves heating of a thermoplastic layer in the packaging laminate to a "sticky" state in a sealing area and clamping of the area by means of sealing jaws. Heating and clamping may be performed in sequence, yet the two operations may also be performed simultaneously, and there are different options available for heating of the thermoplastic layer. A typical packaging container made from a roll-fed system is the Tetra Brik® Aseptic, and an example of a packaging container formed in a blank fed system is the Tetra Rex® system, represented by a typical gable top container, where blanks cut from a web of packaging laminate which are creased, folded and longitudinally sealed are delivered to the filling machine in a flattened state. Inside the filling machine the packaging container is transversally sealed at one end, after which it is filled through the open end, which is subsequently sealed too.

For the second type of system the longitudinal seal may be formed moments before introducing the blank into the filling machine, yet a common approach is to effect the longitudinal seal at the converting facility, and thereafter ship the partly formed packaging containers to the location of the filling machine.

In such a processing plant a web of packaging laminate is cut into individual blanks. The longitudinal edges of the blank are heated and joined in a sealing relationship to form a (flattened) sleeve. There are also examples where the longitudinal edges are heated and joined in a sealing relationship before the web is cut into individual blanks.

Some background art may be found in US3847540 and US3654842.

The present invention relates mainly to an improved method for processing a packaging laminate coupled to heating of the longitudinal edges of the packaging laminate in a processing plant, yet its application may extend outside of that area, and the resulting effects may confer additional advantages in a subsequent filling machine.

One prior art solution is presented in US-patent number US3884131 A. Here, a blank of packaging matenal is formed into a tubular container body of rectangular cross section. Firstly, opposing edges of the blank are heated, while the blank is held in place in a filling machine. The blank is then folded in such a way along existing crease lines that the heated opposing edges are brought into an overlapping position in order to form the tube. In a last step the folded and sealed tube is raised into a container which is ready for subsequent filling.

### Summary

The present invention is defined by the independent claims, and advantages of the invention as well as embodiments thereof are disclosed in the detailed description to follow.

To this end the present invention relates to a method for processing of a web of packaging laminate in relation to fusing of two opposing edges thereof, comprising the steps of:
heating a first edge region of the web on a first side,
heating a second edge region opposing the first edge region, on a second side opposing the first side,
folding the web of packaging laminate such that the first and the second edge region meets in an overlapping relationship to form a flattened tube having an inside and an outside,
applying a pressure onto the overlapped edge regions so as to finalize the seal,
wherein the first edge region facing towards an inside of the flattened tube is heated by means of a flow of electrically heated air.

In one or more embodiments a second edge region is heated by means of gas heaters on an outside thereof.

In several embodiments the method includes the step of heating the first edge region by means of a heating nozzle having a multitude of through holes directing the heated airflow towards the edge region, and in related embodiments the method further comprises the step of arranging the heating nozzle at a distance from the web, said distance being smaller than a longitudinal extension of the through holes of the heating nozzle. In such embodiments it may be preferred that the distance from the web is between 1/3 and 1/2 of the longitudinal extension of the through holes.

For one or more embodiments the longitudinal extension of the through holes of the heating nozzles is 4-10 mm, preferably 5-8 mm and even more preferably 6-7 mm.

Any of the disclosed embodiments may include the step of cutting the web into blanks prior to folding and/or prior to heating.

According to a second aspect the present invention relates to a device for use in a method according to any preceding claim, said device comprising a feed duct leading to a distribution manifold of a heater nozzle, the feed duct comprising electrical heating elements for heating an air flow on an interior side. The heater nozzle comprises a hole pattern in a bottom plate of the nozzle, a hole pattern of through holes for expelling flows of heated air towards a web of packaging material to be heated. It is preferred that he length of a through hole exceeds the distance between the web and a bottom plate by at least a factor of about 2, preferably by a factor of about 3.

In one or more embodiments the longitudinal extension of the through holes of the heating nozzles is 4-10 mm, preferably 5-8 mm and even more preferably 6-7 mm.

### Brief Description of Drawings

Fig. 1 is a plan view of a blank used in the manufacture of a gable-top packaging container.
Fig. 2 is a perspective view of a packaging container of a gable-top type.
Fig. 3 is a highly schematic view of a forming process for forming, folding and sealing packaging blanks of the type shown in Fig. 1.
Fig. 4 is a schematic view illustrating a positional relationship of areas involved in transversal sealing.
Fig. 5 is a schematic frontal view of a nozzle used for the application of hot air according to one embodiment of the present invention.
Fig. 6 is a detailed side view in cross section of the nozzle of Fig. 5.

### Detailed description of Embodiments

For the purposes of explaining the invention a particular embodiment thereof will be described. As always is the case, the particular embodiment does not represent the invention as such, merely a very specific embodiment thereof. The teaching conferred should make it possible for the skilled person to enable the invention in the light of prior art. It may as well be communicated right away that processing of packaging laminate is a delicate business which is affected by numerous factors, both in relation to the equipment used for processing as well as in relation to the packaging laminate itself. This is, however, not the nature of the present invention in isolation but of the technical field as such, and knowing that any processing of packaging material would require detailed considerations and fine tuning is crucial for realizing the enablement of the present invention.

In the disclosed embodiment some of the auxiliary equipment has been included to facilitate understanding of the invention, though they do not form part thereof.

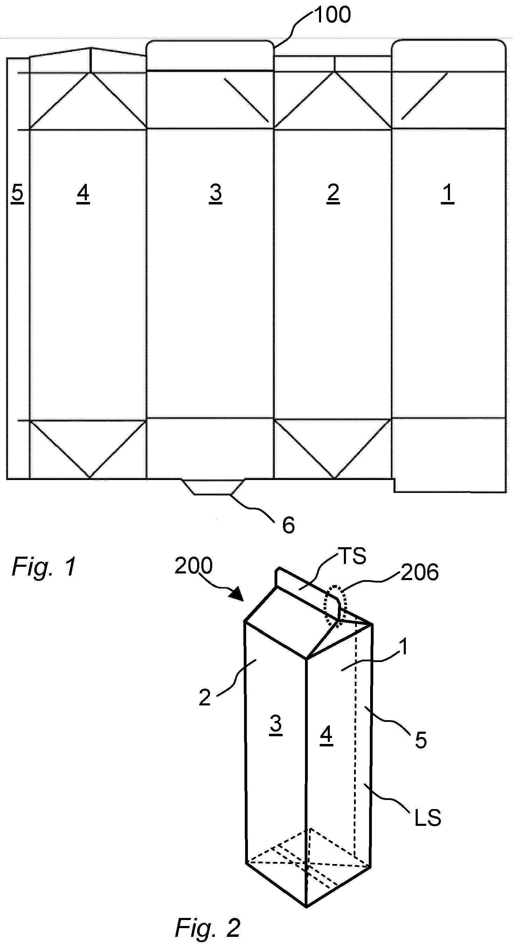

Starting from the packaging laminate to be processed a packaging blank 100 for a gable-top package is shown in Fig. 1. Though the exact design of the outline and the creasing pattern may vary the overall design is quite recognizable. There are five panels, numbered 1-5, of which four will form the lateral sides of the finished container. The fifth panel 5 is used for forming the sheet into a sleeve in that it will be attached to an inside of the first panel (panel No. 1). The fifth panel 5 will thus form part of a longitudinal seal or the LS. A sixth panel 6 is also shown. The sixth panel is used in the bottom sealing, and there are several different configurations available for the bottom sealing as such. Regardless of the detailed design of the outline and the creasing pattern of the blank the step of forming the blank into a sleeve is performed for most gable-top packages. The sleeve, often still referred to as "the blank" is delivered to a filling machine in a flattened state. In the filling machine the blank is risen, folded and sealed at a bottom end, sterilized, filled, folded and sealed at a top end after which it is distributed further.

The end result, one example of a formed, filled and sealed package 200 of gable-top type is shown in Fig. 2. Apart from the longitudinal sealing LS the transversal sealing TS, the sealed top fin, is also shown. It is evident from the drawing that there will be an overlap of the TS and the LS. In Fig. 2 the area in which there is an overlap has been encircled and given the reference numeral 206. In this area 206 the quality of the seal is particularly critical since there is an extra layer of packaging material (the fifth panel 5), and thus an incremental step in the number of layers of packaging material involved in the transversal seal TS. Part of this incremental step increase is accounted for by means of a technique known as skiving and hemming, which is important for the gable-top packaging container as such yet well known and thus not essential to discuss any further in this description. A further detail, which is more important in the context of the present invention, is that the transversal seal TS is accomplished in a filling machine, usually by application of heated air followed by folding and pressing. The transversal sealing is thus generally effected a long time after the realization of the longitudinal seal LS, which is generally accomplished in the converting facility. Part of the area of the transversal seal will thus have been heat treated before, during the realization of the longitudinal seal, and this repeated heating may affect the properties of the transversal seal. For the purposes of enablement it should be noted that general properties regarding top sealing of gable-top packages have been described in numerous patent applications and is an established technique on an industrial scale, and is consequently considered well known for the skilled person.

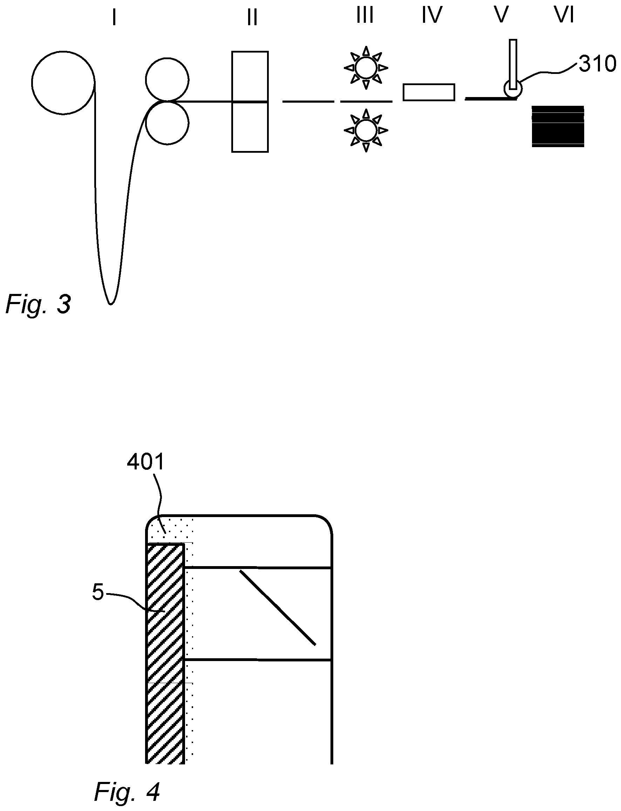

Returning to the initial forming of a sleeve 300 from a cut and creased piece of packaging laminate 304 (see step I and II of Fig. 3). The sleeve forming process comprises three key steps; heating, folding and pressing and it will be described referring to Fig. 3 and Fig. 4. The edges 401, 5 to be fused are heated in step III of Fig. 3. The fifth panel 5 is heated by means of a gas heater displaying an open-flame configuration on an outside thereof, "outside" referring to that it faces away from an interior of the sleeve 302, and the first panel is heated on an inside edge region 401 by means of an electrical heater, details of which will be described. The blank 304 is folded in step IV of Fig. 3 such that the heated regions 401, 5, come to an overlapping engagement, after which a pressure is applied to finalize the fusion in step V of Fig. 3. A roller 310 may advantageously be used to apply the pressure onto the moving blank. To repeat the general process in a sequential manner, in Fig. 3 section II indicates the step of cutting, section III indicates the step of heating, section IV indicates the step of folding, section V the indicates the step of sealing and section VI the step of stacking.

The purpose of the previous description is not to disclose a full description in regard of how a blank for a gable-top package is manufactured, down to details of the production since this has been known for a long time. The purpose is provide a base for understanding the invention in order for the skilled person to be able to enable the present invention by highlight the invention in its context, and to provide a overview for less skilled readers.

Now, part of the inventive idea lies in two basic considerations. The first is that the longitudinal sealing will affect the transversal sealing, even if performed far apart in terms of time and space. The second is that a chain is not stronger than its weakest link, which in the present context reads into that it is futile to optimize the strength of the longitudinal seal and the transversal seal in separate optimization processes, since this may not necessarily result in the strongest combined seal for the packaging container.

Given this mindset and with a considerate effort it was concluded that in the converting facility the area of the fifth panel 5 should be heated with a gas heater, while the receiving inside 401 (the edge referred to earlier) of the first panel should be heated with an electrical heater. Fig. 4 shows an inside of the packaging container and the hatched area corresponds to the fifth panel 5. Further, the fifth panel 5 has been heated with the gas heater on the side remote to the side shown in Fig. 4, while the dotted area 206 corresponds to the area of the first panel which has been heated with an electrical heater. The area which will be involved in the transversal sealing is corresponds to the uppermost portion of the drawing in Fig. 4, and a key aspect is that the area heated with gas a heater will form a direct part of the transversal sealing TS as well as of the longitudinal sealing LS, at least the part of that area extending outside of the fifth panel. While the overlapping area will form part of the seal it will be the backside of the fifth panel 5 which will be activated during transversal sealing, and that side was not activated during longitudinal sealing LS. "Activated" roughly translates to the side having been heated to a sticky state.

The temperature in the heating flow may be about 380-450 °C for the gas heater and about 320-400 °C for the electrically heated air, though other temperature ranges may apply for other materials. The combined use of electrical heating and gas heating improves the sealing properties of the transversal seal too, and a practical effect is that the energy needed for preheating the area of the transversal seal in the filling machine may be reduced as a consequence of the technique used for the longitudinal sealing.

The gas heating may be performed in an indirect manner, where a gas heater is used to heat air, which in turn is used to heat the packaging material. For the gas heaters used in the present embodiment, however, open flames are used to directly heat the packaging material. Gas heaters of this type are known as such, and will not be discussed in any further detail.

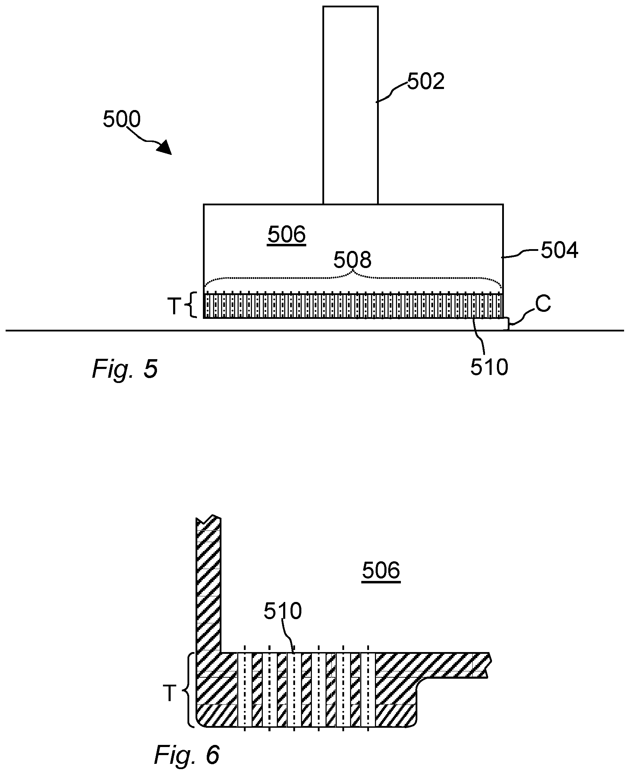

A first aspect of the present invention lies in the combined use of gas and electricity, while the second coupled aspect of the present invention lies in the properties of the electrical heater its cooperation with the packaging laminate. This second aspect will be described in reference to Figs. 5 and 6.

Referring to Fig. 5 showing one embodiment of the heating device 500, it consists of a feed line 502 through which the heated air is supplied. Heating elements (not shown) may be arranged in the feed line in order to have the heating source as close to a nozzle 504 as possible. The feed line 502 exits into a plenum or distribution chamber 506, and in the side of the distribution chamber 506 configured to face the web of packaging material a hole pattern 508 is arranged. The hole pattern 508 comprises a large number of through-holes 510 in a plate forming the side in question. The plate is shaped to conform to the shape of the web passing it, which in most instances implies that it has a planar surface to provide an even and predictable performance in relation to the web.

According to one or more embodiments, e.g. the one illustrated here, it is preferred that the thickness T of the plate is greater than the clearance C (indicated in Fig. 5) between the plate and the web, in use of the device. This makes the performance of the individual jets formed by each through hole 510 more predictable. The thickness T may exceed the clearance C, by a factor of 1.5-4, e.g. by a factor of 2-3. The thickness T of the plate as such is an issue in the area of the through holes 510, and it may be more correct to relate to the lengths L of the through holes 510, since the thickness T of the plate as such may vary as can be seen in Fig. 6. The parameter T may be replaced by the parameter L for purposes related to the dimensions.

The skilled person realizes that there is an extensive list of parameters that have to be tuned in order for the present invention to work. These parameters relate to truly variable parameters, such as temperature, air flow, air temperature, actual distance to the web, speed of the web in relation to a heating nozzle etc, as well as constructional parameters, e.g. the number of through holes, the capacity of heater elements, the capacity of fans, etc. It is important to note that these parameters may vary with numerous factors, and it would be impossible to cover all possible situations within the frame of the present application. By necessity, the tuning of the parameters is a job for the skilled person rather than an aspect of the present invention. For the sake of completeness some examples are given in the following: The temperature of the air flow after it has passed the heater elements may be about 760 °C, and the maximum temperature would be about 900 °C. The heating of the air will result in an increase in volume flow, yet given in a standardized unit the flow through each heater is about 250-270 SLPM. Each through hole has a diameter of about 1.2 mm and there are 474 through holes. The thickness of the plate in the area of the through holes is about 6 mm. The extension of the hole pattern is about 18 mm in a width direction (in the plane of the web and at a right angle to the web travel direction) and 130-150 mm in a length direction parallel to the travel direction of the web. The distance between the bottom of the plate and the web is about 2-3 mm. The speed of the web is about 500 m/min and the travel distance between the final heating step and the pressing steps is about 2.5 m or about 0.3 s. There may be 2-3 such heaters arranged. It should be stressed that this is a description of a single embodiment. If one parameter is altered, such as e.g. the speed of the web, most other parameters would have to be altered too. Performing such alterations would be within the capabilities of the skilled person. Further, changing the properties of the packaging laminate, e.g. using a different plastic composition, may also alter the other parameters. For the purposes of enablement it is relied on that the skilled person is well aware of the fine tuning necessary and that the present invention only relates to detail changes in a well-known field of technology, as is apparent from the claimed scope of protection.

As such one aspect of the present invention, according to one embodiment thereof, relates to the combined use of electrical heating and gas heating, and according to a second aspect it relates to details of a heating nozzle usable in the first aspect.

## Claims

1. A method for processing of a web of packaging laminate in relation to fusing of two opposing edges thereof, comprising the steps of:
heating (III) a first edge region (401) of the web on a first side
heating (III) a second edge region (5) opposing the first edge region (401), on a second side opposing the first side,
folding (IV) the web of packaging laminate such that the first and the second edge region meets in an overlapping relationship to form a flattened tube having an inside and an outside,
applying (V) a pressure onto the overlapped edge regions
wherein the second edge region (5) is heated by means of gas heaters **characterized in that** the first edge region (401) facing towards an inside of the flattened tube is heated by means of a flow of electrically heated air.

2. The method of any preceding claim, comprising the step of heating the first edge region by means of a heating nozzle (504) having a multitude of through holes (510) directing the heated airflow towards the edge region.

3. The method of claim 2, further comprising the step of arranging the heating nozzle (504) at a distance from the web, said distance being smaller than a longitudinal extension of the through holes (510) of the heating nozzle.

4. The method of claim 3, wherein the distance from the web is between 1/3 and 1/2 of the longitudinal extension of the through holes.

5. The method of claim 3 or 4, wherein the longitudinal extension of the through holes of the heating nozzles is 4-10 mm, preferably 5-8 mm and even more preferably 6-7 mm.

6. The method of any preceding claim, further comprising the step (II) of cutting the web into blanks prior to folding (IV) and/or prior to heating (III). heating.

7. The method of any preceding claim, further comprising a step of heating an open end of the flattened tube, in a risen state, by means of an air flow and subsequently sealing said open end.

## Patentansprüche

1. Verfahren zur Verarbeitung einer Bahn aus Verpackungslaminat hinsichtlich der Verschmelzung von zwei gegenüberliegenden Rändern davon, das die folgenden Schritte umfasst:
Erhitzen (III) eines ersten Randbereichs (401) der Bahn auf einer ersten Seite,
Erhitzen (III) eines zweiten Randbereichs (5) gegenüber dem ersten Randbereich (401) auf einer zweiten Seite, die der ersten Seite gegenüberliegt,
derartiges Falten (IV) der Bahn aus Verpackungslaminat, dass der erste und der zweite Randbereich zur Ausbildung einer plattgedrückten Röhre mit einer Innenseite und einer Außenseite mit Überlagerung aufeinandertreffen,
Anlegen (V) eines Drucks an die überlagerten Randbereiche, wobei der zweite Randbereich (5) durch Gasheizvorrichtungen erhitzt wird,
**dadurch gekennzeichnet, dass** der erste Randbereich (401), der zu einer Innenseite der plattgedrückten Röhre weist, durch einen Strom elektrisch erhitzter Luft erhitzt wird.

2. Verfahren nach einem vorhergehenden Anspruch, das den Schritt des Erhitzens des ersten Randbereichs durch eine Heizdüse (504) mit mehreren Durchgangslöchern (510), die den erhitzten Luftstrom zu dem Randbereich leiten, umfasst.

3. Verfahren nach Anspruch 2, das ferner den Schritt des Anordnens der Heizdüse (504) in einem Abstand von der Bahn umfasst, wobei der Abstand weniger als eine Längserstreckung der Durchgangslöcher (510) der Heizdüse beträgt.

4. Verfahren nach Anspruch 3, wobei der Abstand von der Bahn zwischen 1/3 und 1/2 der Längserstreckung der Durchgangslöcher beträgt.

5. Verfahren nach Anspruch 3 oder 4, wobei die Längserstreckung der Durchgangslöcher der Heizdüsen 4-10 mm, vorzugsweise 5-8 mm und stärker bevorzugt 6-7 mm beträgt.

6. Verfahren nach einem vorhergehenden Anspruch, das ferner den Schritt (II) des Schneidens der Bahn in Zuschnitte vor dem Falten (IV) und/oder vor dem Erhitzen (III) umfasst.

7. Verfahren nach einem vorhergehenden Anspruch, das ferner einen Schritt des Erhitzens eines offenen Endes der plattgedrückten Röhre in einem entfalteten Zustand durch einen Luftstrom und nachfolgendes Versiegeln des offenen Endes umfasst.

## Revendications

1. Procédé de traitement d'une bande de stratifié d'emballage en rapport avec la fusion de deux bords opposés de celui-ci, comprenant les étapes suivantes :
chauffer (III) une première région de bord (401) de la bande sur un premier côté,
chauffer (III) une deuxième région de bord (5) opposée à la première région de bord (401), sur un deuxième côté opposé au premier côté,
plier (IV) la bande de stratifié d'emballage de telle sorte que la première et la deuxième région de bord se rejoignent dans une relation de chevauchement pour former un tube aplati ayant une partie intérieure et une partie extérieure,
appliquer (V) une pression sur les régions de bord chevauchées, la deuxième région de bord (5) étant chauffée au moyen de dispositifs de chauffage à gaz,
**caractérisé en ce que**
la première région de bord (401) tournée vers l'intérieur du tube aplati est chauffée au moyen d'un flux d'air chauffé de manière électrique.

2. Procédé selon l'une quelconque des revendications précédentes, comprenant l'étape consistant à chauffer la première région de bord au moyen d'une buse de chauffage (504) ayant une pluralité de trous traversants (510) dirigeant le flux d'air chauffé vers la région de bord.

3. Procédé selon la revendication 2, comprenant en outre l'étape consistant à disposer la buse de chauffage (504) à distance de la bande, ladite distance étant inférieure à une étendue longitudinale des trous traversants (510) de la buse de chauffage.

4. Procédé selon la revendication 3, dans lequel la distance à la bande est comprise entre 1/3 et 1/2 de l'étendue longitudinale des trous traversants.

5. Procédé selon la revendication 3 ou 4, dans lequel l'étendue longitudinale des trous traversants des buses de chauffage est de 4-10 mm, de préférence de 5-8 mm et plus préférablement de 6-7 mm.

6. Procédé selon l'une quelconque des revendications précédentes, comprenant en outre l'étape (II) de découpe de la bande en pièces découpées avant le pliage (IV) et/ou avant le chauffage (III).

7. Procédé selon l'une quelconque des revendications précédentes, comprenant en outre une étape consistant à chauffer une extrémité ouverte du tube aplati, dans un état soulevé, au moyen d'un flux d'air et de sceller subséquemment ladite extrémité ouverte.
